# EUROPÄISCHE PATENTSCHRIFT

(11) **EP 1 722 140 B1**
(45) Veröffentlichungstag und Bekanntmachung des Hinweises auf die Patenterteilung: **18.06.2008**
(21) Anmeldenummer: 05016847.5
(22) Anmeldetag: 03.08.2005
(51) Int. Cl.: F16K 27/00, F16K 31/46, F16K 11/14, E03B 7/12

(54) **Frostsicheres Standventil**
Nonfreezing valve
Valve protégée du gel

(30) Priorität: 10.05.2005 DE 202005007628 U
(43) Veröffentlichungstag der Anmeldung: 15.11.2006
(73) Patentinhaber: Interforge Klee GmbH, 27356 Rotenburg/Wümme (DE)
(72) Erfinder: Klee, Klaus F., 27356 Rotenburg/W. (DE)
(74) Vertreter: Eisenführ, Speiser & Partner

(56) Entgegenhaltungen:
- WO-A-20/04094879
- DE-U1- 20 113 627
- DE-U1- 20 219 008
- US-A- 2 819 926
- US-A- 4 109 671

## Beschreibung

Die Erfindung betrifft ein Ventilvorrichtung für den frostsicheren Außenbetrieb, umfassend: eine Zulauföffnung, eine Abgabeöffnung, einen Verbindungskanal, welcher die Zulauföffnung mit der Abgabeöffnung verbindet, ein erstes Ventil, welches ausgebildet ist, um die Fluidverbindung durch den Verbindungskanal in einer ersten Funktionsstellung freizugeben und in einer zweiten Funktionsstellung zu verschließen, und eine Betätigungsvorrichtung zum Betätigen des ersten Ventils, ein zweites Ventil, das in der ersten und zweiten Funktionsstellung geschlossen ist und das mit einer Ablassöffnung zusammenwirkt, die so mit dem Verbindungskanal verbunden ist, dass in einer dritten Funktionsstellung, in der das erste Ventil geschlossen und das zweite Ventil geöffnet ist, die in dem Verbindungskanal befindliche Flüssigkeit durch die Ablassöffnung abfließen kann.

Ventilvorrichtungen für den Außenbetrieb, also für Bereiche, die der Witterung und insbesondere den witterungsbedingten Temperaturschwankungen ohne Schutz ausgesetzt sind, sind bekannt. Sie dienen beispielsweise dazu, im Außenbereich von Gebäuden Wasser für die Gartenpflege bereitzustellen oder in Gärtnereibetrieben an verschiedenen Stellen Wasser für die Bewässerung der Pflanzen bereitzustellen.

Ein Problem bei diesen Ventilvorrichtungen besteht darin, dass diese bekannten Ventilvorrichtungen frostgefährdet sind, da das darin befindliche Wasser bei Absinken der Temperatur unter den Gefrierpunkt gefrieren kann und dann funktionswesentliche Teile der Ventilvorrichtung beschädigen kann. Um solchen Schäden vorzubeugen ist es bekannt, diese Ventilvorrichtungen vor dem Einsetzen von Minustemperaturen von der Wasserversorgung abzusperren und die Ventilvorrichtungen dann bei Minustemperaturen nicht mehr zu benutzen. Dies ist jedoch nicht zufriedenstellend, da hierdurch ein erheblicher Aufwand für die Bereitstellung von Wasser aus anderen, frostsicheren Quellen, betrieben werden muss.

Aus dem Bereich der Hydrantentechnik ist es bekannt, ein in ausreichender Tiefe im Boden versenktes Ventil vorzusehen, das mit einem in die Versenkung einführbaren Schlüssel betätigt wird. Dieses Ventil liegt so tief, dass üblicherweise auch bei Minustemperaturen der Luft kein Einfrieren zu befürchten ist und folglich ein frostsicherer Außenbetrieb möglich ist. Jedoch ist dieses Ventil nur sehr umständlich zu betätigen und darüber hinaus besteht stets die Gefahr, dass nach Betätigung noch Wasser in der aus dem Erdreich führenden Leitung stehen bleibt und dieses Wasser bei Minustemperaturen gefriert und dann zu Beschädigungen der Ventilvorrichtung führt.

Aus DE 201 13 627 U1 ist eine Bauwasserentnahmevorrichtung bekannt, die einen durch eine Absperrvorrichtung verschließbaren Entnahmekanal aufweist und weiterhin eine Belüftungsvorrichtung aufweist, die durch eine mit einem Betätigungselement gekoppelte Absperrvorrichtung es ermöglicht, das Bauwasser aus einem Steigrohr zu entleeren. Zum Betätigen der Absperrvorrichtung des Entnahmekanals ist eine weitere Betätigungsvorrichtung vorgesehen.

Aus DE 202 19 008 U ist eine frostsichere Ventilvorrichtung bekannt, die für den Einbau in einen Durchbruch durch eine Außenwand eines Gebäudes geeignet ist. Bei dieser Ventilvorrichtung liegt das Verschlussventil im Inneren des Gebäudes, also im frostsicheren Bereich, und kann durch eine im Außenbereich liegende Betätigungsvorrichtung geöffnet und geschlossen werden. Bei Schließen des Ventils wird diese Ventilvorrichtung durch die Abgabeöffnung in den Außenbereich entleert, sodass sich im verschlossenen Zustand kein Wasser in der Ventilvorrichtung befindet. Diese Ventilvorrichtung erlaubt einen frostsicheren Betrieb, kann jedoch nur in horizontaler Lage eingebaut werden. Es besteht daher ein Bedarf für eine frostsichere Ventilvorrichtung, die in jeder Lage, insbesondere in senkrechter Lage eingebaut werden kann und die insbesondere auch nicht darauf angewiesen ist, in einer Gebäudewand eingebaut zu werden.

Dieser Bedarf wird erfindungsgemäß befriedigt durch eine Ventilvorrichtung der eingangs genannten Art, die fortgebildet ist dadurch dass das zweite Ventil so mit der Betätigungsvorrichtung zusammenwirkt, dass es mittels der Betätigungsvorrichtung in die Offen-Stellung bewegbar ist, vorzugsweise nachdem das erste Ventil mittels der Betätigungsvorrichtung in die Geschlossen-Stellung bewegt worden ist. Auf diese Weise wird eine sichere Entwässerung der Ventilvorrichtung durch die Bedienung der Betätigungsvorrichtung erzielt und insbesondere vermieden, dass durch die Ablassöffnung eine andere Flüssigkeit als diejenige abgelassen wird, die in der Ventilvorrichtung nach Schließen des ersten Ventils stehen bleibt.

Die erfindungsgemäße Ventilvorrichtung ermöglicht es, dass durch die Ablassöffnung das Wasser aus der Ventilvorrichtung abfließt, wenn das erste Ventil geschlossen wird und hierdurch nach Durchlaufen der zweiten Funktionsstellung das zweite Ventil in der dritten Funktionsstellung geöffnet wird. Dieser Ablauf des Wassers aus der Ventilvorrichtung ist auch dann gewährleistet, wenn die Ventilvorrichtung, also insbesondere der Verbindungskanal, in einer Ausrichtung verbaut ist, in der er sich in vertikaler Richtung erstreckt. Bei diesen Einbaulagen war es bei bekannten Ventilvorrichtungen regelmäßig nicht möglich, dass eine Entwässerung durch die am oberen Ende angeordnete Abgabeöffnung stattfindet und folglich konnte keine Frostsicherheit erzielt werden.

Die erfindungsgemäße Ventilvorrichtung gewährleistet auf diese Weise eine zuverlässige Entwässerung bzw. Belüftung des Innenraums der Ventilvorrichtung und stellt darüber hinaus sicher, dass bei Entnahme von Flüssigkeit über die Ventilvorrichtung keine Flüssigkeit durch die Ablassöffnung verloren geht.

Es ist bevorzugt, wenn das erste Ventil einen ersten Ventilsitz und einen ersten Ventilkörper umfasst, und die Betätigungsvorrichtung über ein erstes elastisches Element mit dem ersten Ventilkörper verbunden ist. Auf diese Weise besteht keine starre Verbindung zwischen dem ersten Ventil und der Betätigungsvorrichtung, sondern die Betätigungsvorrichtung vermittelt dem Benutzer keinen festen Anschlag, wenn das erste Ventil geschlossen wurde und die zweite Funktionsstellung erreicht wurde. Stattdessen kann nach Schließen des ersten Ventils die Betätigungsvorrichtung weiter betätigt werden, wobei das elastische Element gespannt wird. Dies ermöglicht insbesondere eine einfache und zuverlässige Differenzierung zwischen zweiter und dritter Funktionsstellung, da zwischen diesen beiden Funktionsstellungen die Betätigungsvorrichtung gegen das elastische Zwischenelement weiter betätigt werden kann.

Weiterhin ist es bevorzugt, dass das zweite Ventil einen zweiten Ventilsitz und einen zweiten Ventilkörper umfasst und mittels eines zweiten elastischen Elements in die Geschlossen-Stellung gedrückt wird. Auf diese Weise wird das zweite Ventil in die sichere Betriebsstellung, in der keine Flüssigkeit unbeabsichtigt aus der Ventilvorrichtung entweichen kann, gedrückt und folglich kann die Betriebssicherheit der erfindungsgemäßen Ventilvorrichtung erhöht werden. Das erste und das zweite elastische Element können vorzugsweise Schraubenfedern sein, die als Zug- oder Druckfedern ausgeführt sind. Es sind jedoch auch andere Ausführungsformen denkbar, wie Elastomerfedern, Tellerfedern, Spiralfedern oder Ähnliches.

Weiterhin ist es bevorzugt, wenn ein erstes elastisches Element der zuvor beschriebenen Weise vorgesehen ist und das zweite Ventil mit der Betätigungsvorrichtung nach der vorgenannten Art zusammenwirkt, wenn das zweite Ventil mittels der Betätigungsvorrichtung unter Verspannung des ersten elastischen Elements in die Offen-Stellung bewegbar ist. Auf diese Weise kann die Betätigungsvorrichtung zunächst ohne das erste elastische Element zu verspannen, betätigt werden, um das erste Ventil aus der Offenstellung in die Geschlossenstellung zu bewegen und hierauf folgend kann die Betätigungsvorrichtung in der gleichen Richtung weiterbetätigt werden, wobei gegen die elastische Kraft des ersten elastischen Elements gearbeitet wird und dieses elastische Element elastisch verformt wird, um hierdurch das zweite Ventil zu öffnen und folglich aus der zweiten in die dritte Funktionsstellung der erfindungsgemäßen Ventilvorrichtung zu gelangen.

Es ist weiterhin vorteilhaft, wenn das erste und zweite Ventil als Schieberventil, insbesondere als Drehschieberventil ausgeführt sind.

Diese Fortbildung weist eine Reihe von Vorteilen auf. Die erfindungsgemäße Ventilvorrichtung neigt dazu, in der dritten Ventilstellung noch geringe Flüssigkeitsmengen durch die Abgabeöffnung auszugeben, um die Entleerung aller Teile des Verbindungskanals zu erzielen. Diese Entleerung wird von vielen Benutzern jedoch so aufgefasst, dass die Ventilvorrichtung nicht vollständig geschlossen ist und es wird daher die Betätigungsvorrichtung mit verstärktem Kraftaufwand betätigt, um die Ventilvorrichtung vollständig abzudichten. Diese Fehlbedienung kann zu einem vorzeitigen Versagen der Ventildichtungen führen und die Lebensdauer der Ventilvorrichtung wird hierdurch vermindert. Dieser Nachteil kann durch die Ausführung des ersten und zweiten Ventils als Schieberventil überwunden werden. Ein Schieberventil weist typischerweise definierte Betriebspositionen auf, die bei einem Drehschieberventil beispielsweise als definierte Winkelpositionen ausgebildet sind. Durch diese Ausführungsform wird vermieden, dass ein Benutzer fälschlicherweise annimmt, das Ventil nicht vollständig geschlossen zu haben, da dies durch die definierte Position zweifelsfrei optisch oder haptisch für den Benutzer erkennbar ist.

Ein weiterer Vorteil der Ausbildung als Schieberventil liegt darin, dass Schieberventile allgemein einen zuverlässigen Betrieb ermöglichen, der eine sichere Abdichtung des Ventils über einen langen Betriebszeitraum gewährleistet.

Grundsätzlich kann das erste Ventil in ein erstes Schieberventil integriert werden und das zweite Ventil in ein zweites Schieberventil integriert werden, die in geeigneter Weise gekoppelt sind, um die erste, zweite und dritte Funktionsstellung durch die Betätigungsvorrichtung eingestellt werden kann. Es ist aber insbesondere bevorzugt, dass das erste und zweite Ventil in ein einziges Schieberventil, insbesondere in ein Drehschieberventil integriert sind. Ein Schieberventil kann grundsätzlich so ausgebildet werden, dass mehrere Funktionsstellungen durch das Schieberventil eingestellt werden können. Daher eignet sich die Fortbildungsform mit dem Schieberventil insbesondere dafür, das erste und zweite Ventil in ein einziges Schieberventil zu integrieren, um auf diese Weise alle Funktionsstellungen der erfindungsgemäßen Ventilvorrichtung durch Betätigen eines einzigen Schieberventils bereitzustellen. Dies erlaubt einen konstruktiv besonders zuverlässigen Aufbau und eine Reduzierung der bewegten Teile und der Bauteile insgesamt der erfindungsgemäßen Ventilvorrichtung.

Die Integration des ersten und zweiten Ventils in ein einziges Schieberventil kann insbesondere erfolgen, indem das Schieberventil ein erstes Ventilelement mit einer ersten und einer zweiten Durchflussöffnung und ein zweites Ventilelement umfasst, das relativ zum ersten Ventilelement bewegbar ist und mindestens eine Öffnung zum Erzeugen einer Fluidverbindung durch eine der Durchflussöffnungen im ersten Ventilelement aufweist, wobei das zweite und erste Ventilelement so ausgebildet sind, dass
- die erste Durchflussöffnung des ersten Ventilelements in der ersten Funktionsstellung freigegeben ist,
- beide Durchflussöffnungen des ersten Ventilelements in der zweiten Funktionsstellung verschlossen sind, und
- die zweite Durchflussöffnung des ersten Ventilelements in der dritten Funktionsstellung freigegeben ist.

Diese Ausführungsform ermöglicht eine besonders kompakte Gestaltung des Schieberventils und eine besonders kostengünstige und verschleißarme Ausbildung des ersten und zweiten Ventils in einem einzigen Schieberventil. Das erste Ventilelement kann vorzugsweise scheibenförmig ausgebildet sein und die erste und zweite Durchflussöffnung in axialer Richtung ausgerichtet sein. Die erste und zweite Durchflussöffnung können insbesondere so angeordnet sein, dass zwischen ihnen ein Abstand besteht, der größer ist als die Abmessungen der exzentrischen Öffnung im zweiten Ventilelement. Auf diese Weise kann in einfacher Weise sichergestellt werden, dass erste und zweite Durchflussöffnung in keiner Anordnung des ersten zum zweiten Ventilelementes beide freigegeben sind. Diese Ausführungsform eignet sich insbesondere zur Ausführung des Ventils als Drehschieberventil, wobei vorzugsweise die beiden Ventilelemente als scheibenförmige Elemente ausgebildet sind und die Betätigungsvorrichtung auf das zweite Ventilelement wirkt, welches drehbar ist und eine exzentrische Öffnung aufweist.

Weiterhin ist es vorteilhaft, wenn das erste Ventilelement und das zweite Ventilelement in erster und zweiter und vorzugsweise auch dritter Funktionsstellung den gleichen axialen Abstand zueinander aufweisen, wobei insbesondere das erste Ventilelement als Scheibe mit mindestens zwei exzentrischen Öffnungen ausgebildet ist. In diesem Fall kann eine der zwei exzentrischen Öffnungen mit der Zulaufverbindung und die andere der beiden exzentrischen Öffnungen mit der Ablassöffnung in Verbindung stehen. Auf diese Weise kann zwischen der ersten und der dritten Funktionsstellung gewechselt werden, indem das zweite Ventilelement so bewegt wird, dass einerseits die eine und andererseits die andere exzentrische Öffnung in Fluidverbindung zur Abgabeöffnung geschaltet wird, vorzugsweise durch eine Verdrehung des zweiten Ventilelements um etwa 90° oder 180°.

Weiterhin ist es bevorzugt, dass die zwei exzentrischen Öffnungen des ersten Ventilelement um 180° zueinander versetzt sind.

Eine weitere vorteilhafte Fortbildung der erfindungsgemäßen Ventilvorrichtung besteht darin, dass das Schieberventil zumindest ein Ventilelement aus einem keramischen Material aufweist, vorzugsweise zwei Ventilelemente aus einem keramischen Material. Auf diese Weise wird ein besonders verschleißfreier Betrieb durch die hohe Verschleißfestigkeit keramischer Materialien erreicht.

Es ist insbesondere bevorzugt, dass die Betätigungsvorrichtung um jeweils etwa 90° verschwenkt werden muss, um von der einen Funktionsstellung in eine andere Funktionsstellung zu gelangen. Diese Betätigungsweise ist für einen Benutzer intuitiv zu begreifen. Die Betätigungsweise kann in verschiedenen Arten realisiert werden. So kann beispielsweise von der zweiten in die erste Funktionsstellung durch Verschwenken der Betätigungsvorrichtung um 90° in einer ersten Richtung geschaltet werden und von der zweiten in die dritte Funktionsstellung durch Verschwenken der Betätigungsvorrichtung um 90° in der anderen Richtung geschaltet werden. In anderer Weise kann die Umschaltung von der zweiten in die erste Funktionsstellung durch Verschwenken um 90° in einer Richtung erfolgen und das Schalten von der ersten in die dritte Funktionsstellung durch Verschwenken um 90° in der gleichen Richtung erfolgen, sodass in diesem Fall zwischen zweiter und dritter Funktionsstellung eine Verschwenkung um 180° erfolgen muss. Andere Funktionsweisen sind für den Fachmann in einfacher Weise erkennbar und umsetzbar.

Dabei kann insbesondere vorgesehen sein, dass die Betätigungsvorrichtung um etwa 90° verschwenkt werden muss, um von der ersten in die zweite Funktionsstellung zu gelangen und um weitere 90° verschwenkt werden muss, um von der zweiten in die dritte Funktionsstellung zu gelangen.

Die erfindungsgemäße Ventilvorrichtung kann weiterhin fortgebildet werden, indem die Ventilvorrichtung für den Einbau in eine horizontale Bodenfläche ausgebildet ist und einen oberen Ventilvorrichtungsabschnitt, in dem ein oberer Verbindungskanalabschnitt, die Abgabeöffnung und vorzugsweise die Betätigungsvorrichtung angeordnet ist, und einen unteren Ventilvorrichtungsabschnitt, in dem die Zulauföffnung, die Ablassöffnung und vorzugsweise das erste und zweite Ventil angeordnet ist, aufweist. Bei dieser Ausführungsform sind die Funktionselemente, welche besonders frostgefährdet sind, im unteren Ventilabschnitt angeordnet und können folglich bei Einbau des Ventils in eine horizontale Bodenfläche in einer solchen Tiefe angeordnet sein, dass sie im frostsicheren Bereich liegen. Hierdurch wird die Frostsicherheit der Ventilvorrichtung weiter gesteigert. Auf diese Weise wird insbesondere eine Ventilvorrichtung erzielt, die mit senkrecht stehendem Verbindungskanal in den Boden eingesetzt werden kann, wobei die Betätigungsvorrichtung, also insbesondere ein Drehgriff oder Ähnliches, und die Abgabeöffnung in angenehmer Bedienungshöhe für einen Benutzer oberhalb des Bodens angeordnet ist und die funktionswichtigen und frostgefährdeten Bauelemente der Ventilvorrichtung im Boden in einer frostsicheren Tiefe angeordnet sind.

Dabei ist es insbesondere bevorzugt, wenn der untere Ventilvorrichtungsabschnitt, so lang ist, dass die Zulauföffnung in der Einbausituation etwa 80cm tief im Erdreich angeordnet ist. Die Tiefe von 80cm wird als frostsichere Tiefe nach Normung in mitteleuropäischen Breitengraden angesehen. Vielfach ist auch eine Tiefe von lediglich 60cm ausreichend für einen frostsicheren Betrieb.

Weiterhin ist es bevorzugt, wenn die Betätigungsvorrichtung ein manuell betätigbares Griffelement aufweist, das mittels einer Verbindungsstange, die sich durch einen Teil des Verbindungskanals erstreckt, mit dem ersten Ventil verbunden ist. Diese Ausführungsform erzielt eine besonders kompakte und robuste Gestaltung der Ventilvorrichtung und ermöglicht darüber hinaus ein besonders schlankes Design, da außer dem Verbindungskanal keine weiteren Bauelemente sich bei Einbau in den Boden aus dem Boden erstrecken müssen.

Eine weitere Fortbildung der erfindungsgemäßen Ventilvorrichtung besteht darin, dass im oberen Bereich der Ventilvorrichtung eine Belüftungsöffnung vorhanden ist, die einen Zutritt von Umgebungsluft in den Verbindungskanal zwecks Entleerung der Flüssigkeit aus dem Kanal durch die Ablassöffnung erlaubt. Grundsätzlich kann in vielen Einbaulagen zwar eine Belüftung der inneren Ventilvorrichtung über die Abgabeöffnung erfolgen und folglich eine Entleerung der Flüssigkeit durch die Ablassöffnung ermöglicht werden. In einigen Einbaulagen und Ausführungsformen ist es jedoch vorteilhaft, wenn eine Belüftungsöffnung vorhanden ist, die im oberen Bereich der Ventilvorrichtung angeordnet ist und die den Unterdruck bei Entleerung der Flüssigkeit durch die Ablassöffnung ausgleicht, indem sie es ermöglicht, dass Umgebungsluft in das Innere der Ventilvorrichtung eintritt.

Dabei ist es insbesondere vorteilhaft, wenn die Belüftungsöffnung mit einem dritten Ventil zusammenwirkt, welche die Belüftungsöffnung bei Vorhandensein eines Überdrucks im Verbindungskanal verschließt. Auf diese Weise wird verhindert, dass durch die Belüftungsöffnung Flüssigkeit nach Außen tritt, wenn die Ventilvorrichtung in der ersten Funktionsstellung ist. Das dritte Ventil ist erfindungsgemäß vorzugsweise als automatisch öffnendes bzw. schließendes Ventil ausgebildet, das in Abhängigkeit des Innendrucks in der Ventilvorrichtung öffnet bzw. schließt. Es ist jedoch auch eine Ausführungsform in bestimmten Fällen vorteilhaft, bei der auch das dritte Ventil durch die Betätigungsvorrichtung geöffnet wird, wenn die zweite oder dritte Funktionsstellung eingestellt wird.

Insbesondere ist es bei den beiden vorgenannten Ausführungsformen vorteilhaft, wenn das dritte Ventil einen dritten Ventilsitz und eine dritten Ventilkörper umfasst und mittels eines dritten elastischen Elements in die Offen-Stellung gedrückt wird. Auf diese Weise wird eine sichere Öffnung der Belüftungsöffnung erzielt. Das dritte elastische Element muss dabei so ausgeführt sein, dass es eine schwächere Kraft in die Offenstellung auf das Ventil ausübt, als der Innendruck in der Ventilvorrichtung in der ersten Funktionsstellung der Ventilvorrichtung in die Geschlossen-Stellung ausübt.

Eine weitere bevorzugte Ausführungsform zeichnet sich durch eine erste Rückflussverhinderungsvorrichtung aus, die zwischen Zuflussöffnung und erstem Ventil angeordnet ist zur Verhinderung des Zutritts von Schmutzwasser aus der Ventilvorrichtung in die Zuflussöffnung. Diese Ausführungsform ist vorteilhaft, wenn die Ventilvorrichtung an eine Trinkwasserleitung angeschlossen wird, um hierdurch zu verhindern, dass Schmutzwasser in die Trinkwasserleitung gelangt. Die Rückflussverhinderungsvorrichtung kann dabei als Rückschlagventil oder Ähnliches ausgeführt sein.

Weiterhin ist es vorteilhaft, wenn eine zweite Rückflussverhinderungsvorrichtung vorhanden ist, die zwischen Ablassöffnung und zweitem Ventil angeordnet ist zur Verhinderung des Zutritts von Schmutzwasser aus der Umgebung in die Ventilvorrichtung. Auf diese Weise wird verhindert, dass die Ventilvorrichtung in ihrem Inneren durch Schmutzwasser verunreinigt wird, das durch die Ablassöffnung eintritt. Auch die zweite Rückflussverhinderungsvorrichtung kann dabei als Rückschlagventil oder Ähnliches ausgeführt sein.

Dabei ist es jedoch besonders bevorzugt, wenn die zweite Rückflussverhinderungsvorrichtung einen Ventilschwimmkörper umfasst, der ausgebildet ist, um bei Zutritt von Wasser durch die Ablassöffnung aufzuschwimmen und abdichtend gegen einen Ventilsitz gedrückt zu werden. Auf diese Weise wird eine einfache und zuverlässige Abdichtung des Inneren der Ventilvorrichtung gegen Zutritt von Schmutzwasser durch die Ablassöffnung erzielt.

Schließlich ist ein weiterer Aspekt der Erfindung ein Verfahren zum Belüften einer Ventilvorrichtung für den frostsicheren Außenbetrieb, bei dem in einer Funktionsstellung der Ventilvorrichtung, in der ein erstes Ventil, das mittels einer Betätigungsvorrichtung in eine geschlossene Stellung gebracht wird, geschlossen ist, und das eine Zulauföffnung mit einer Abgabeöffnung der Ventilvorrichtung verbindet, ein zweites Ventil mittels der Betätigungsvorrichtung geöffnet wird, wobei das zweite Ventil mit einer Ablassöffnung zusammenwirkt, die so mit dem Verbindungskanal verbunden ist, dass in der dritten Funktionsstellung die in dem Verbindungskanal befindliche Flüssigkeit durch die Ablassöffnung abfließt. Das erfindungsgemäße Verfahren ermöglicht eine effiziente Entleerung einer Ventilvorrichtung nach Entnahme von Flüssigkeit durch die Ventilvorrichtung und kann somit einen frostsicheren Betrieb der Ventilvorrichtung ermöglichen.

Bevorzugte Ausführungsformen der Erfindung werden anhand der Figuren beschrieben. Es zeigen:
Figur 1a eine längsgeschnittene Seitenansicht des oberen Teils einer ersten Ausführungsform der erfindungsgemäßen Ventilvorrichtung in einer ersten Funktionsstellung,
Figur 1b eine längsgeschnittene Seitenansicht des unteren Teils der erfindungsgemäßen Ventilvorrichtung in der ersten Funktionsstellung,
Figur 2a eine Ansicht gemäß Figur 1a in einer zweiten Funktionsstellung,
Figur 2b eine Ansicht gemäß Figur 1b in der zweiten Funktionsstellung,
Figur 3a eine Ansicht gemäß Figur 1a in einer dritten Funktionsstellung,
Figur 3b eine Ansicht gemäß Figur 1b in der dritten Funktionsstellung,
Figur 4 eine längsgeschnittene, unterbrochene Gesamtansicht einer ersten Ausführungsform der erfindungsgemäßen Ventilvorrichtung in der dritten Funktionsstellung,
Figur 5 eine perspektivische Ansicht von schräg vorne oben einer ersten Ausführungsform der erfindungsgemäßen Ventilvorrichtung,
Figur 6a eine längsgeschnittene Seitenansicht des oberen Teils einer zweiten Ausführungsform der erfindungsgemäßen Ventilvorrichtung in einer ersten Funktionsstellung,
Figur 6b eine längsgeschnittene Seitenansicht des unteren Teils der zweiten Ausführungsform der erfindungsgemäßen Ventilvorrichtung in der ersten Funktionsstellung,
Figur 6c eine längsgeschnittene Rückansicht des unteren Teils der zweiten Ausführungsform der erfindungsgemäßen Ventilvorrichtung in der ersten Funktionsstellung,
Figur 7a eine Ansicht gemäß Figur 6a in einer zweiten Funktionsstellung,
Figur 7b eine Ansicht gemäß Figur 6b in der zweiten Funktionsstellung,
Figur 7c eine Ansicht gemäß Figur 6c in der zweiten Funktionsstellung,
Figur 8a eine Ansicht gemäß Figur 6a in der dritten Funktionsstellung,
Figur 8b eine Ansicht gemäß Figur 6b in der dritten Funktionsstellung,
Figur 8c eine Ansicht gemäß Figur 6c in der dritten Funktionsstellung, und
Figur 9 eine perspektivische Explosionsdarstellung der zweiten Ausführungsform der erfindungsgemäßen Ventilvorrichtung in einer Ansicht von schräg seitlich vorne oben.

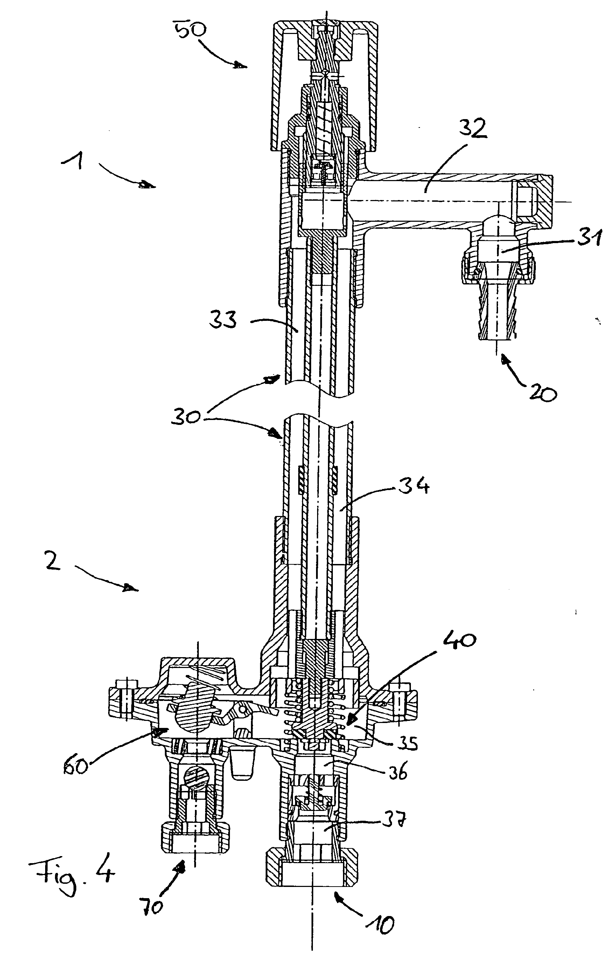

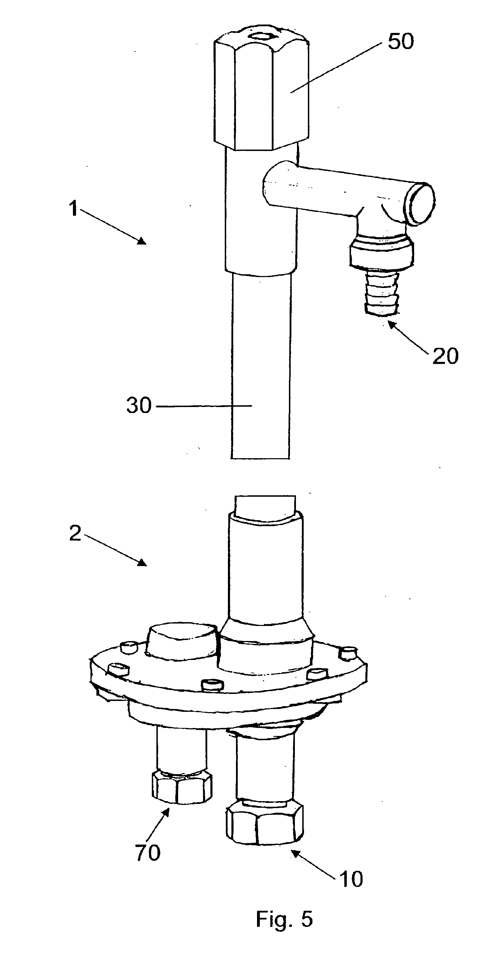

Bezugnehmend zunächst auf die Figuren 4 und 5 umfasst die erfindungsgemäße Ventilvorrichtung einen oberen Abschnitt 1 und einen unteren Abschnitt 2.

Im oberen Ventilvorrichtungsabschnitt 1 ist eine Abgabeöffnung 20, und eine Betätigungsvorrichtung 50 sowie ein Verbindungskanal 30 mit oberen Verbindungskanalabschnitten 31-33 angeordnet.

Im unteren Ventilvorrichtungsabschnitt 2 ist eine Zulauföffnung 10, ein erstes Ventil 40, eine Ablassöffnung 70 und ein zweites Ventil 60 sowie untere Verbindungskanalabschnitte 34-37 des Verbindungskanals 30 angeordnet.

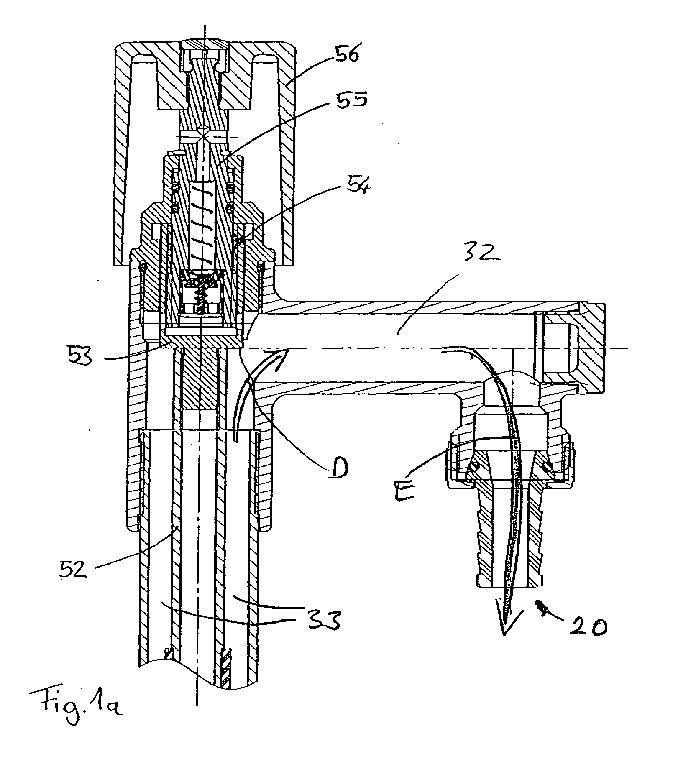

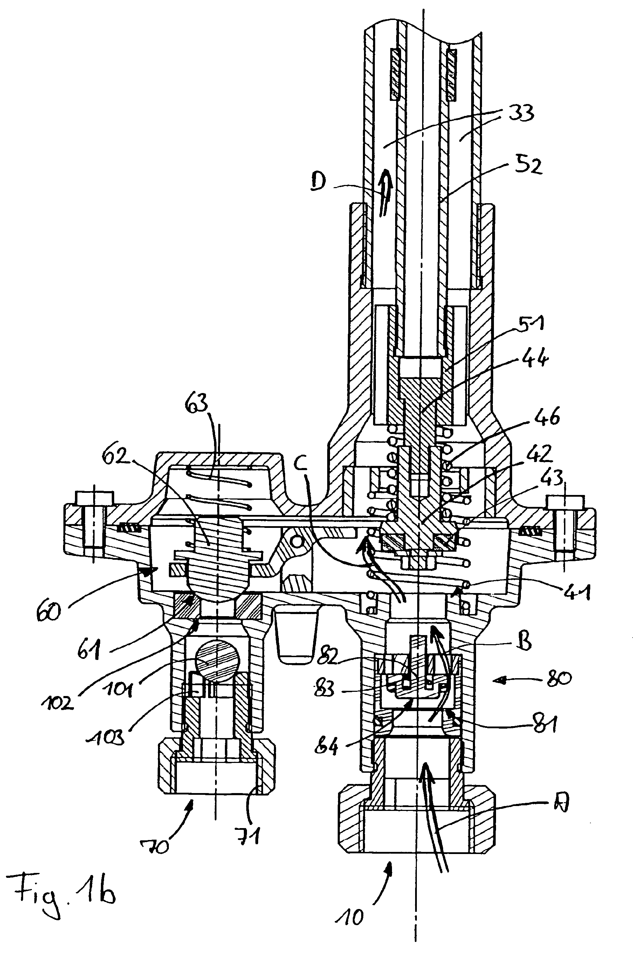

In den Figuren 1 a und 1b ist die Ventilvorrichtung in einer ersten Funktionsstellung abgebildet, in der Wasser von der Zulauföffnung durch den Verbindungskanal 30 fließen kann und aus der Abgabeöffnung 20 ausgegeben werden kann.

Das Wasser strömt hierzu durch die Zulauföffnung 10 in vertikaler Richtung in die Ventilvorrichtung ein. Es passiert dann ein Rückschlagventil 80, das hinter der Zulauföffnung angeordnet ist. Das Rückschlagventil 80 umfasst einen Ventilsitz 81, in den ein Ventilkörper 82 mittels einer Schraubenfeder 83 gedrückt wird. Der Wasserdruck übt eine gegen die Schraubenfeder 83 wirkende Kraft auf die Ventilkörperfläche 84 aus und hebt dadurch den Ventilkörper 82 von dem Ventilkörpersitz 81 ab, wodurch ein Zulauf von Wasser ermöglicht wird.

Das Wasser strömt dann weiter, wie mit Pfeil B gekennzeichnet, in Richtung des ersten Ventils 40.

Das erste Ventil 40 umfasst einen Ventilkörpersitz 41 und einen Ventilkörper 42 mit Dichtungselement 43. Der Ventilkörper 42 ist mit einem Bolzen 44 verschraubt, der mit seinem der Verschraubung gegenüberliegenden Ende axial verschieblich in einer Zwischenhülse 51 eingepasst ist. Der Bolzen 44 wird durch eine Schraubenfeder, die sich zwischen der Zwischenhülse 51 und dem Ventilkörper 42 erstreckt, in die in Figur 1b dargestellte unter Position gedrückt. Die Zwischenhülse 51 ist Ihrerseits mit einer Betätigungsstange 52 an deren erstem, unteren Ende verschraubt. Die Betätigungsstange 52 ist an ihrem zweiten, oberen Ende mit einem Adapterstück 53 verschraubt.

Das Adapterstück 53 kann mittels eines Betätigungsgewindes 54, welches zwischen Adapterstück 53 und einer Betätigungsspindel 55 ausgebildet ist, in axialer Richtung verschoben werden, wenn die Betätigungsspindel 55 gedreht wird. Zur komfortablen Bedienung ist ein Drehhandgriff 56 drehmomentfest mit der Betätigungsspindel 55 verbunden.

In Figur 1a und 1b ist das Adapterstück 53 mittels des Gewindes 54 in die oberste Position bewegt, sodass der Ventilkörper 42 mittels der Betätigungsstange 52 vom Ventilkörpersitz 41 abgehoben ist und der Durchfluss, mittels Pfeil C gekennzeichnet, freigegeben ist. Das Wasser strömt hierdurch durch das erste Ventil 40 und kann durch den ringförmigen Verbindungskanal 30 nach oben strömen (gezeigt durch Pfeil D) und aus der Abgabeöffnung 20 abgegeben werden (gezeigt durch Pfeil E).

Ein zweites Ventil 60, umfassend einen Ventilkörpersitz 61 und einen Ventilkörper 62 wird in der in Figur 1a,b gezeigten ersten Funktionsstellung durch eine Schraubenfeder 63 in die geschlossene Stellung gedrückt. Hierdurch wird verhindert, dass Wasser aus der Ventilvorrichtung durch eine Ablassöffnung 70 austritt.

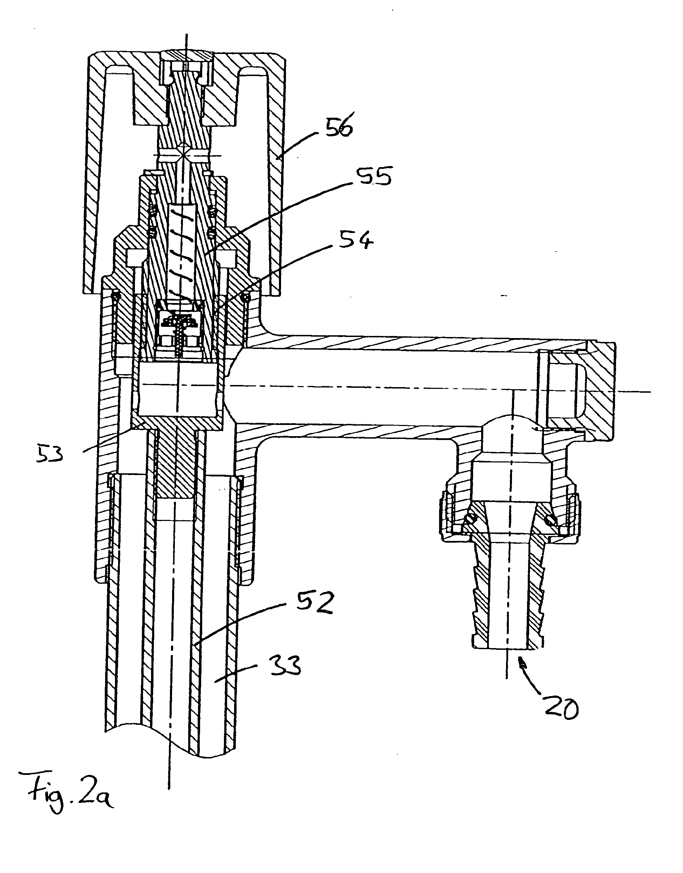

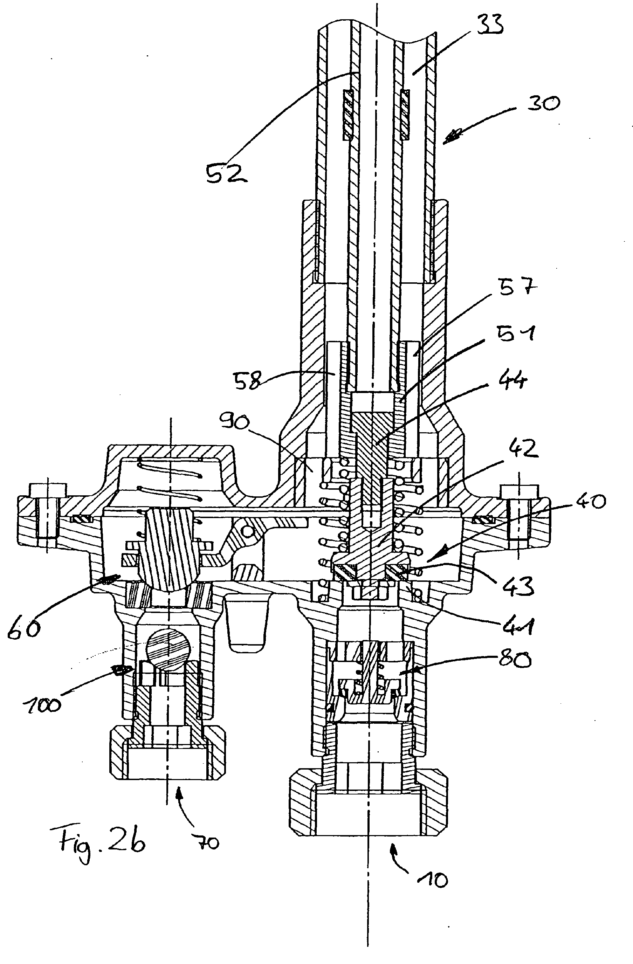

In den Figuren 2a,b ist die erfindungsgemäße Ventilvorrichtung in einer zweiten Funktionsstellung gezeigt. In dieser zweiten Funktionsstellung ist das Adapterstück 53 durch Drehen des Drehhandgriffs 56 mittels des Gewindes 54 abgesenkt worden, sodass der Ventilkörper 42 mit seinem Dichtungselement 43 auf dem Ventilkörpersitz 41 dichtend aufsitzt. In dieser zweiten Funktionsstellung wird der Zufluss von Wasser durch das erste Ventil 40 verhindert und folglich kann kein Wasser von der Zulauföffnung 10 zur Abgabeöffnung 20 strömen.

In der zweiten Funktionsstellung wird das zweite Ventil weiterhin durch die Schraubenfeder 43 in die Geschlossen-Stellung gedrückt, sodass auch kein Wasser durch die Ablassöffnung 70 ausströmen kann.

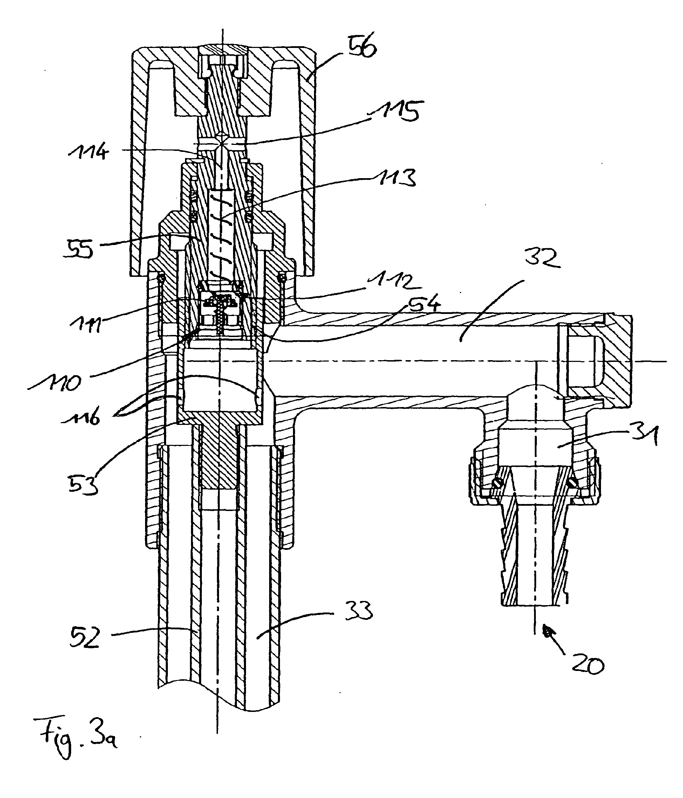

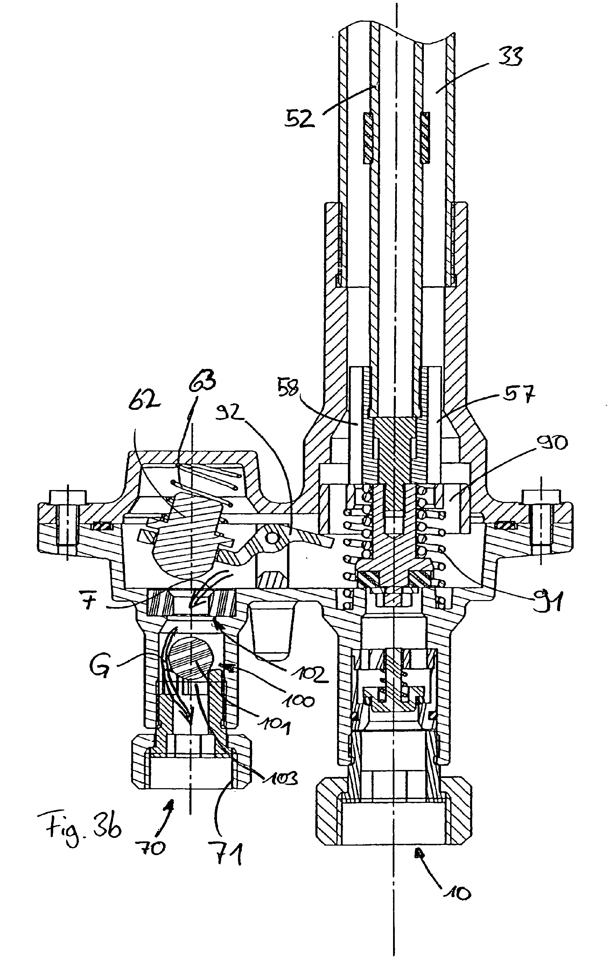

In den Figuren 3a,b ist die erfindungsgemäße Ventilvorrichtung in einer dritten Funktionsstellung dargestellt. In dieser dritten Funktionsstellung ist das Adapterstück 53 über das Gewinde 54 mittels Drehhandgriff 56 gegenüber der zweiten Funktionsstellung noch weiter abgesenkt worden, sodass die Betätigungsstange 52 die Schraubenfeder 46 komprimiert hat. Die Betätigungsstange 52 kann mit der daran befestigten Zwischenhülse 51 soweit abgesenkt werden, bis die Zwischenhülse 51 soweit relativ zum Bolzen 44 axial verschoben ist, dass der Bolzen 44 gegen seinen oberen Anschlag am unteren Ende der Betätigungsstange anstößt.

Zugleich drückt die Zwischenhülse 51 mit mehreren, sich radial erstreckenden Rippen 57,58 auf eine Doppelhülse 90, die hierdurch gegen die elastische Kraft einer Schraubenfeder 91 nach unten bewegt wird.

Die Doppelhülse 90 betätigt hierdurch mit ihrem äußeren Rohrelement einen Schwenkhebel 92, der mit dem Ventilkörper 62 des zweiten Ventils 60 verbunden ist und hierdurch den Ventilkörper 62 gegen die Kraft der Schraubenfeder 63 vom Ventilkörpersitz 61 abhebt.

Hierdurch wird der Durchfluss, gezeigt mit Pfeil F, durch das zweite Ventil 60 freigegeben und das in der Ventilvorrichtung befindliche Wasser kann durch die Ablassöffnung 70 an einer Rückflussverhinderungsvorrichtung 100 vorbei (gezeigt mit Pfeil G) durch die Ablassöffnung 70 strömen.

In der dritten Funktionsstellung wird darüber hinaus der Zutritt von Umgebungsluft über eine Bohrung 115 ermöglicht. Hierzu ist ein Belüftungsventil 110, welches einen Ventilkörper 111 und einen Ventilkörpersitz 112 umfasst, aus seiner Geschlossen-Stellung mittels einer Schraubenfeder 113 in die Offen-Stellung gedrückt. Die Luft strömt hierdurch unter dem Betätigungshandgriff 56 durch, wodurch der Zutritt von Schmutz auf diesem Wege verhindert wird, tritt in den Belüftungskanal 115 ein, durchströmt einen zweiten Belüftungskanalabschnitt 114, strömt entlang der Schraubenfeder 113 durch das Ventil 110 und tritt durch die Radialbohrungen 116 im Adapterstück 53 in den Innenraum der Ventilvorrichtung ein. Hierdurch wird der durch das abfließende Wasser verursachte Unterdruck im Inneren der Ventilvorrichtung ausgeglichen.

Die erfindungsgemäße Ventilvorrichtung umfasst weiterhin eine Rückflussverhinderungsvorrichtung 100, die verhindert, dass Schmutzwasser durch die Ablassöffnung 70 in die Ventilvorrichtung eindringt. Zu diesem Zweck ist oberhalb der Ablassöffnung 70 eine schwimmfähige Kugel 101 auf einem Käfig 103 angeordnet, die bei Eintritt von Schmutzwasser durch die Ablassöffnung 70 aufschwimmt und gegen einen Ventilsitz 102 gepresst wird.

Auf diese Weise wird verhindert, dass die Ventilvorrichtung durch Schmutzwasser in ihrer Funktion behindert wird.

Die Ablassöffnung 70 weist darüber hinaus ein Anschlussgewinde 71 auf, an die eine Drainagevorrichtung, beispielsweise ein Drainageschlauch, angeschlossen werden kann, um auch in beispielsweise lehmigen Böden sicherzustellen, dass das Wasser aus der Ventilvorrichtung in der dritten Funktionsstellung zuverlässig im Erdreich um die Ventilvorrichtung herum versickern kann.

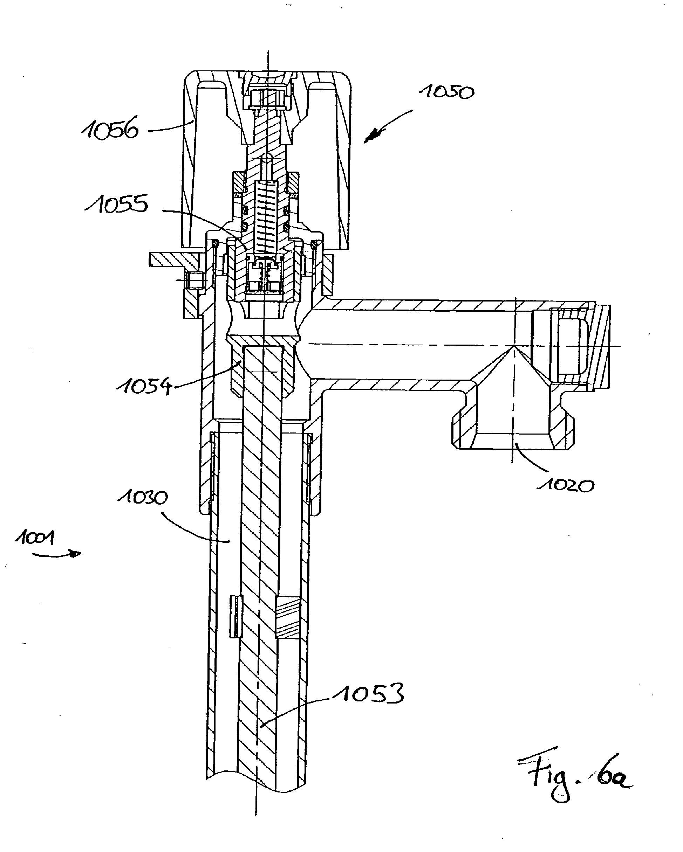

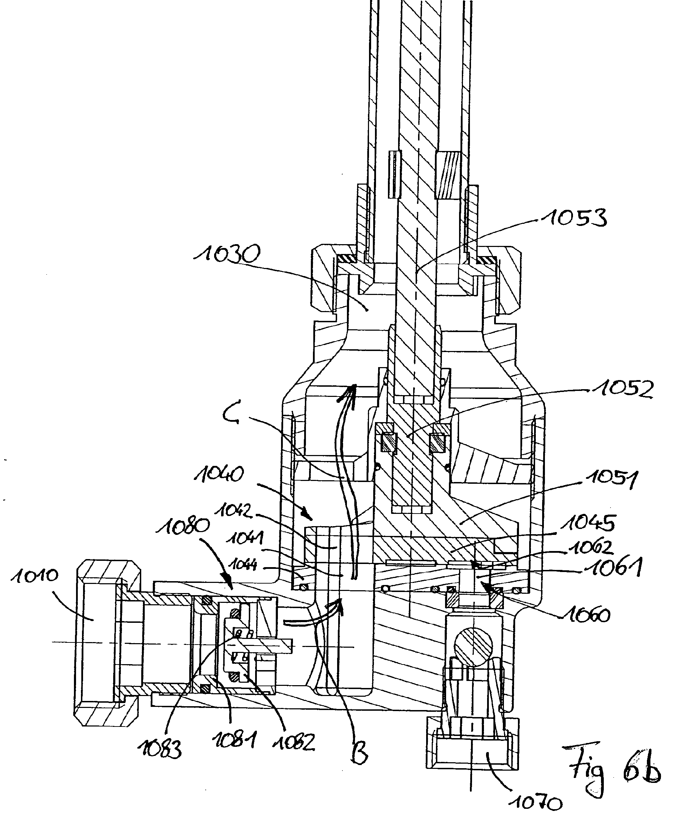

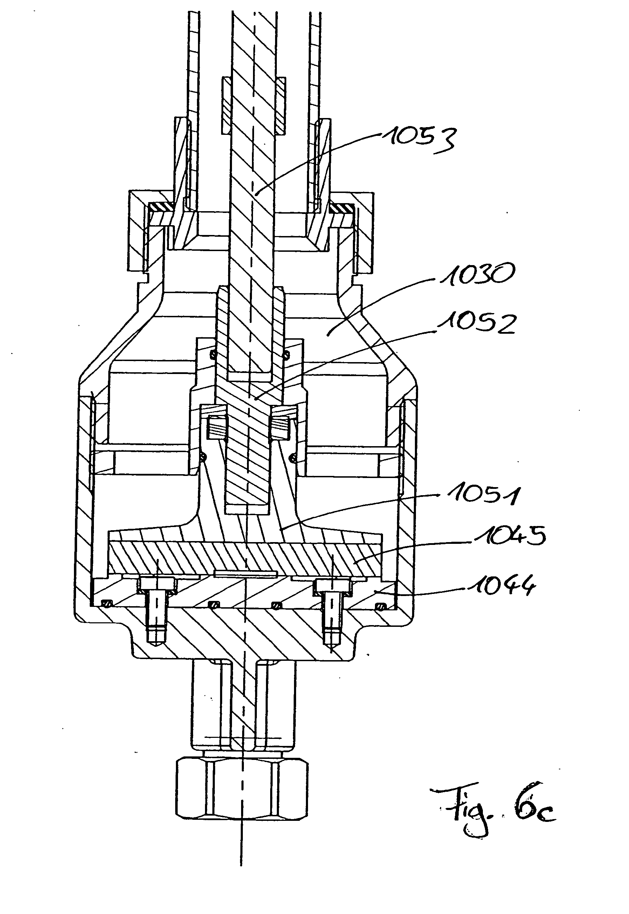

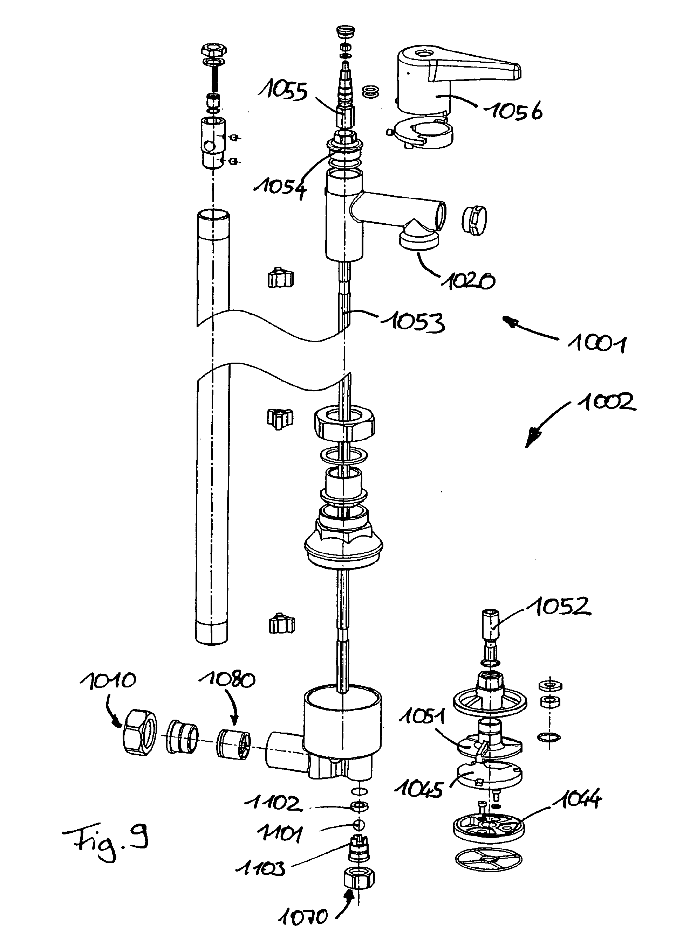

Bezugnehmend auf die Figuren 6-9 weist die zweite Ausführungsform der erfindungsgemäßen Ventilvorrichtung ebenfalls einen oberen Abschnitt 1001 und einen unteren Abschnitt 1002 auf. Im oberen Ventilvorrichtungsabschnitt 1001 ist eine Abgabeöffnung 1020 und eine Betätigungsvorrichtung 1050 sowie ein Verbindungskanal 1030 und im unteren Ventilvorrichtungsabschnitt 1002 ist eine Zulauföffnung 1010, ein erstes Ventil 1040, ein zweites Ventil 1060 und eine Ablassöffnung 1070 sowie weitere Abschnitte des Verbindungskanals 1030 angeordnet.

In den Figuren 6a-c ist die zweite Ausführungsform in einer ersten Funktionsstellung abgebildet, in der Wasser von der Zulauföffnung durch den Verbindungskanal 1030 fließen kann und aus der Abgabeöffnung 1020 ausgegeben werden kann.

Das Wasser strömt hierzu durch die Zulauföffnung 1010 in horizontaler Richtung in die Ventilvorrichtung ein. Es passiert dann ein Rückschlagventil 1080, das hinter der Zulauföffnung angeordnet ist. Das Rückschlagventil 1080 ist ebenso ausgebildet wie das Rückschlagventil 80 der ersten Ausführungsform und umfasst dementsprechend einen Ventilsitz 1081, einen Ventilkörper 1082 und eine Schraubenfeder 1083.

Das Wasser strömt dann weiter, wie mit Pfeil B gekennzeichnet, in Richtung des ersten Ventils 1040.

Das erste Ventil 1040 wird durch eine exzentrisch zur Mittelachse einer keramischen Ventilscheibe 1044 liegenden Öffnung 1041 gebildet, die mit einer exzentrischen Öffnung 1042 in einer zweiten, drehbaren und ebenfalls keramischen Ventilscheibe 1045 zusammenwirkt. Die beiden exzentrischen Öffnungen 1041,1042 sind in der ersten Funktionsstellung so zueinander angeordnet, dass das Wasser durch die beiden Öffnungen strömen kann und somit vertikal in den Verbindungskanal 1030 eintreten kann, wie mit Pfeil C gekennzeichnet.

Die obere, drehbar gelagerte zweite Ventilscheibe 1045 ist mit einem Betätigungsring 1051 drehmomentfest verbunden, der seinerseits drehmomentfest mit einer Kupplung 1052 verbunden ist. Die Kupplung 1052 ist drehmomentfest mit einer als Sechskantstange ausgeführten Betätigungsstange 1053 verbunden, die sich vom unteren Ventilvorrichtungsabschnitt 1002 in den oberen Ventilvorrichtungsabschnitt 1001 erstreckt.

Wie insbesondere gut in Figur 6a zu erkennen, ist die Betätigungsstange 1053 am oberen Ende drehmomentfest mit einem Einschraubteil 1054 verbunden, das seinerseits drehmomentfest mit einer Spindel 1055 verbunden ist.

Die Spindel 1055 ist drehmomentfest mit einem Griffstück 1056 verbunden, das in der dargestellten Ausführungsform als zylindrische Hohlkappe mit angeformtem Schwenkgriff ausgebildet ist.

Die zweite, bewegliche Ventilscheibe 1045 hat, wie in Figur 6b und Figur 6c gut zu erkennen ist, keine weitere Durchflussöffnung als die Durchflussöffnung 1042, sodass für das Wasser lediglich der Durchtritt durch die Öffnung 1041,1042 in der ersten Funktionsstellung möglich ist. Wie ebenfalls in Figur 6c gut zu erkennen, ist die erste, feststehende Ventilscheibe 1044 mittels Innensechskantschrauben in dem unteren Gehäuseabschnitt eines Ventilgehäuses befestigt.

Ein zweites Ventil 1060 wird durch eine zweite exzentrische Öffnung 1061 in der ersten Ventilscheibe 1044 und die exzentrische Öffnung 1042 in der ersten, drehbaren Ventilscheibe 1045 gebildet. Das erste Ventil 1040 und das zweite Ventil 1060 sind somit in die beiden Ventilscheiben 1044,1045 integriert. Die zweite exzentrische Öffnung 1061 liegt um 180° versetzt zur ersten Öffnung 1041 in der ersten Ventilscheibe 1044. Die zweite exzentrische Öffnung 1061 ist in der ersten Funktionsstellung durch einen entsprechenden Dichtungsflächenabschnitt 1062 der zweiten, beweglichen Ventilscheibe verschlossen.

Die Öffnungen 1041 und 1042 sind im Querschnitt kuchenstückförmig mit abgeflachter Spitze ausgebildet um einen maximalen Durchflussquerschnitt bei geringer Ventilscheibenabmessung zu erlauben.

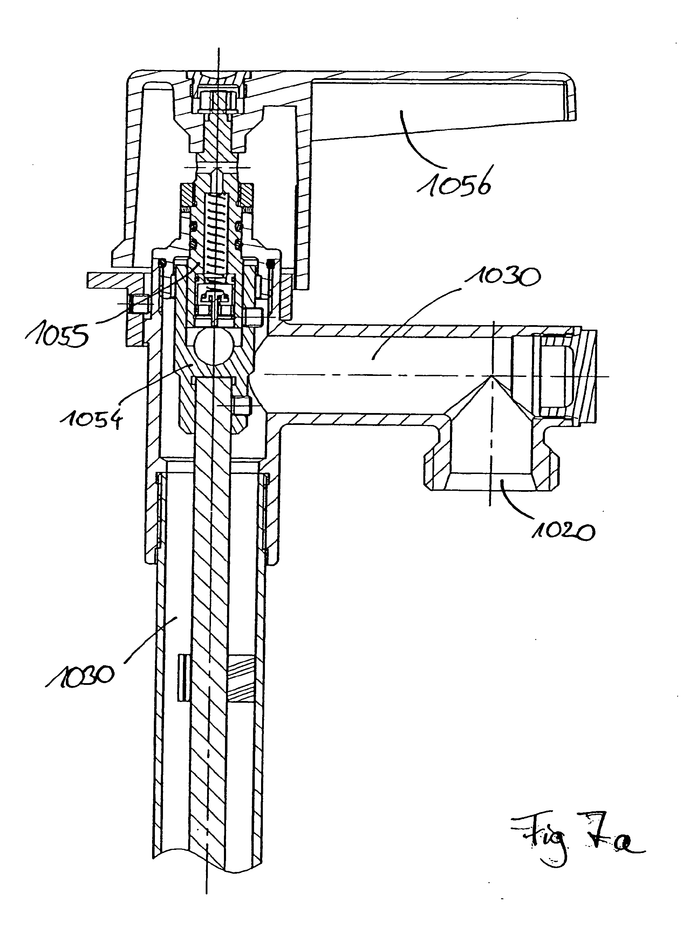

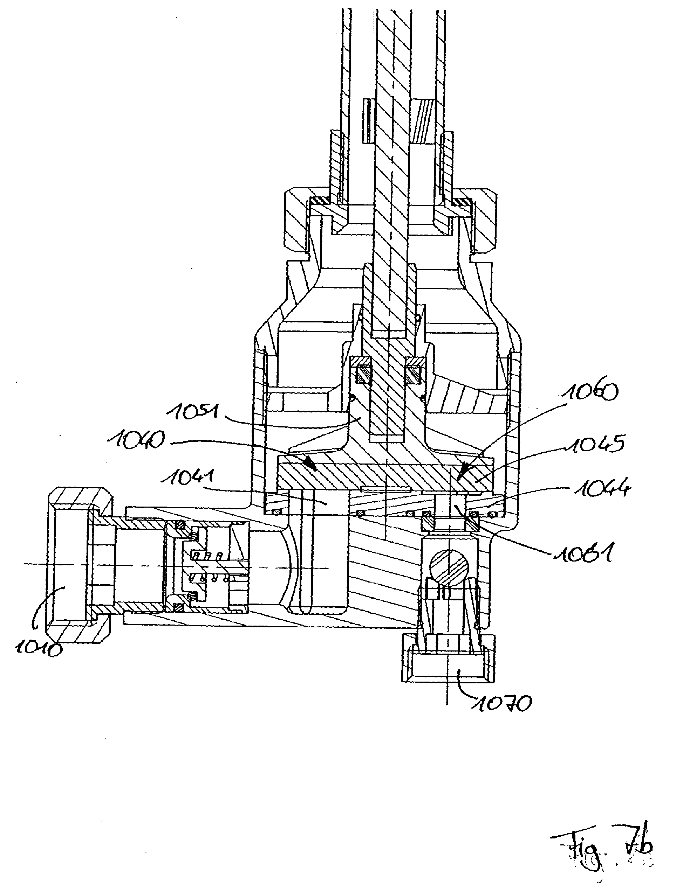

In den Figuren 7a-c ist die zweite Ausführungsform der erfindungsgemäßen Ventilvorrichtung in einer zweiten Funktionsstellung gezeigt. In dieser zweiten Funktionsstellung ist der Ventilhandgriff 1056 um 90° zur ersten Funktionsstellung verschwenkt, wodurch dementsprechend die zweite, drehbare Ventilscheibe 1045 um 90° gegenüber der in Figur 6a-c gezeigten Stellung verschwenkt ist.

Durch diese Verschwenkung ist die exzentrische Öffnung 1042 in der zweiten, keramischen Ventilscheibe 1045 weder in Fluidverbindung mit der ersten exzentrischen Öffnung 1041 noch mit der zweiten exzentrischen Öffnung 1061 der ersten Ventilscheibe 1044. Auf diese Weise kann das Wasser weder das erste Ventil 1040 noch das zweite Ventil 1060 passieren, d.h. es findet weder ein Fluss von Wasser von der Zulauföffnung 1010 zur Abgabeöffnung 1020 statt noch ein Ablauf von Wasser aus dem Verbindungskanal durch die Ablassöffnung 1070.

Die zweite Funktionsstellung kann beispielsweise bei ausreichend warmen Außenbedingungen als geschlossene Funktion der erfindungsgemäßen Ventilvorrichtung verwendet werden. Die Funktionsstellung ermöglicht es, dass der Austritt von Wasser durch die Abgabeöffnung gestoppt wird, jedoch das Wasser nicht aus dem Verbindungskanal 1030 entfernt wird, d.h. die Ventilvorrichtung wird nicht entwässert. Auf diese Weise wird einerseits verhindert, dass ein Benutzer durch ein Abtropfen von Restwasser aus der Abgabeöffnung veranlasst wird, eine Undichtigkeit anzunehmen und andererseits wird für den nächsten Öffnungsvorgang vermieden, dass eine Bewässerung des gesamten Verbindungskanals erfolgen muss, da dieser nicht entwässert wurde. Weiterhin kann durch diese "Sommer"-Stellung Wasser gespart werden, das andernfalls, bei stattfindender Entwässerung, bei jedem Schließvorgang in das umliegende Erdreich aus dem Verbindungskanal absickern würde.

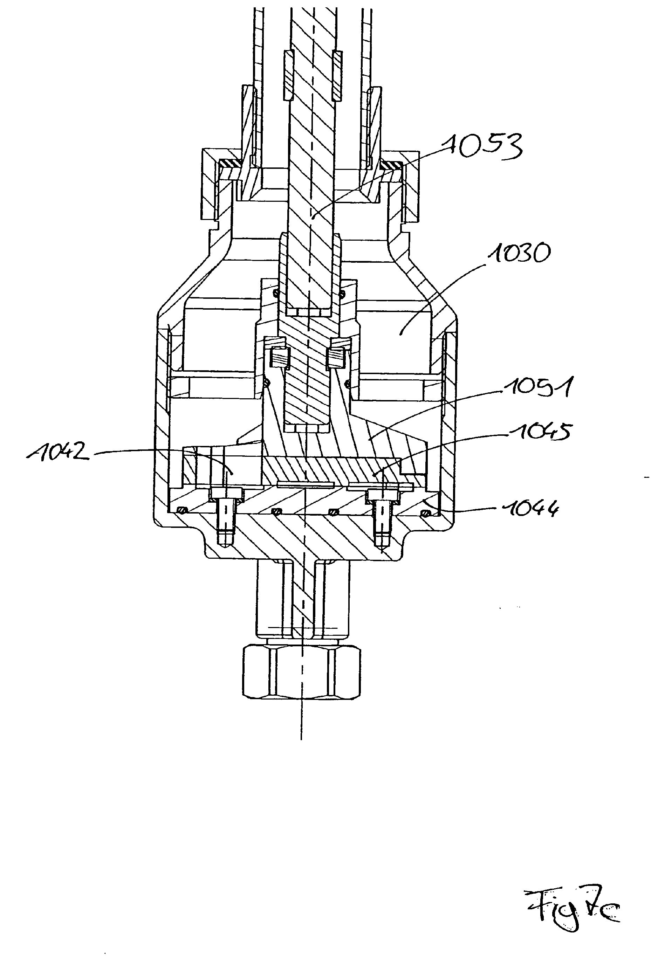

Wie gut in Figur 7c zu erkennen ist, liegt die exzentrische Öffnung 1042 in der zweiten, beweglichen Ventilscheibe 1045 in der zweiten Funktionsstellung einem geschlossenen Abschnitt der ersten Ventilscheibe gegenüber, sodass kein Wasserdurchtritt durch diese Öffnung möglich ist.

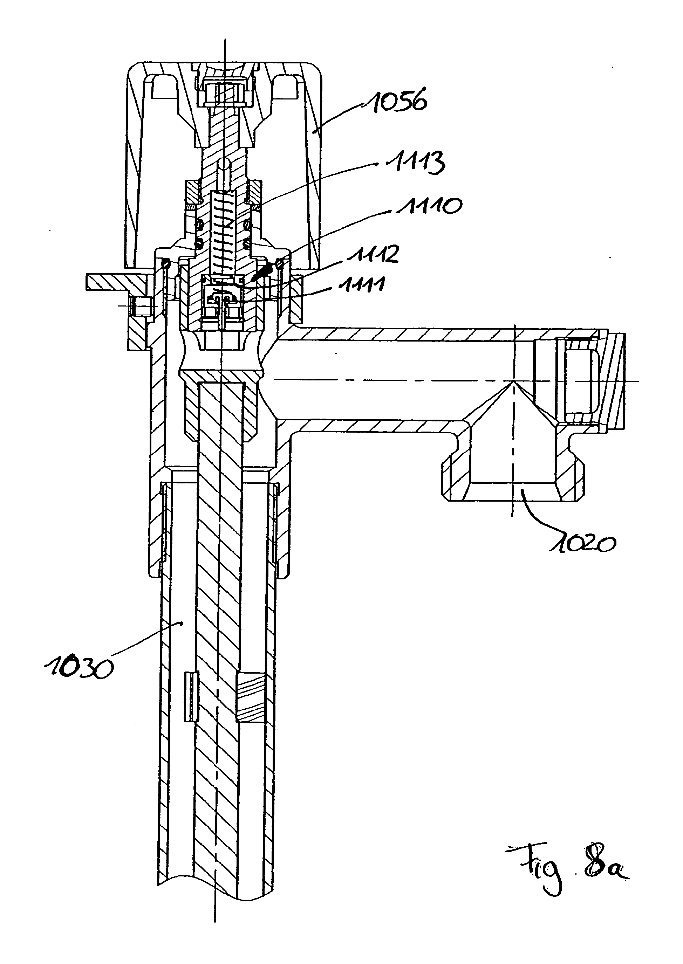

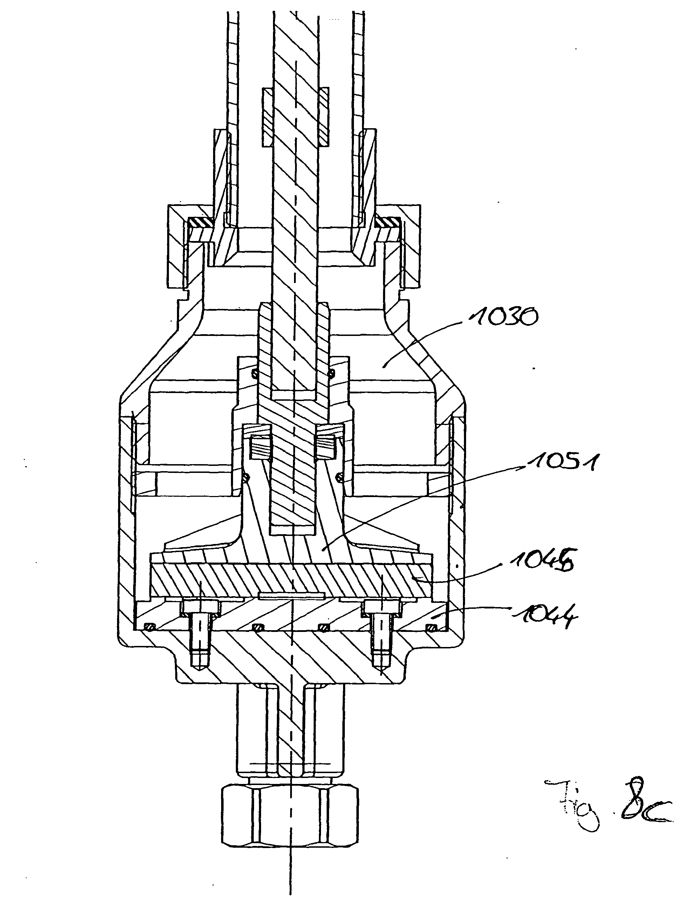

In den Figuren 8a-c ist die zweite Ausführungsform der erfindungsgemäßen Ventilvorrichtung in einer dritten Funktionsstellung dargestellt. In dieser dritten Funktionsstellung ist die zweite, drehbare Ventilscheibe gegenüber der zweiten Funktionsstellung um 90° und gegenüber der ersten Funktionsstellung um 180° verschwenkt. Die dritte Funktionsstellung dient dazu, den Durchfluss des Wassers von der Zulauföffnung 1010 zur Abgabeöffnung 1020 zu sperren und die Ventilvorrichtung zu entwässern, d.h. zu belüften. Auf diese Weise wird das in der Ventilvorrichtung befindliche Wasser entfernt und somit ein frostsicherer Betrieb ermöglicht. Die dritte Funktionsstellung kann daher als "Winter"-Geschlossenstellung bezeichnet werden.

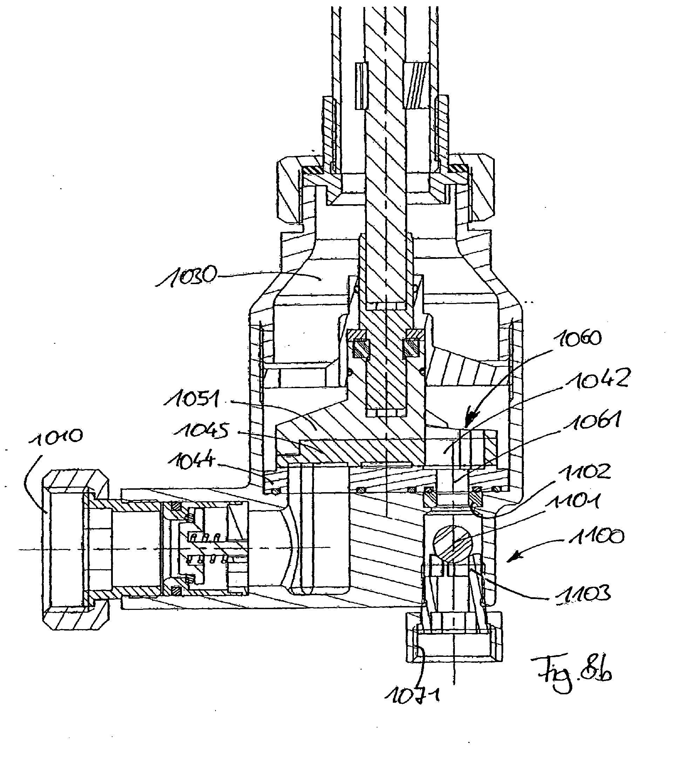

In der dritten Funktionsstellung ist, wie gut in Figur 8b zu erkennen ist, die exzentrische Öffnung 1042 der zweiten, drehbaren Ventilscheibe 1045 in Fluidverbindung mit der zweiten exzentrischen Öffnung 1061 der ersten Ventilscheibe 1044. Auf diese Weise ist das zweite Ventil 1060 geöffnet.

Die zweite, exzentrische Öffnung 1061 ist in Fluidverbindung mit einer Rückflussverhinderungsvorrichtung 1100 in Fluidverbindung. Die Rückflussverhinderungsvorrichtung 1100 ist in gleicher Weise ausgebildet wie die Rückflussverhinderungsvorrichtung 100 der ersten Ausführungsform der ersten Ausführungsform und umfasst folglich eine oberhalb der Ablassöffnung 1070 angeordnete, schwimmfähige Kugel 1101, die auf einem Käfig 1103 angeordnet ist und bei Eintritt von Schmutzwasser durch die Ablassöffnung 1070 aufschwimmt und gegen einen Ventilsitz 1102 gepresst wird.

In der dritten Funktionsstellung kann das im Verbindungskanal 1030 angeordnete Wasser durch die Ventilöffnungen 1042,1061 des zweiten Ventils zu der Rückflussverhinderungsvorrichtung 1100 strömen, diese durch den Käfig 1103 passieren und aus der Ablassöffnung 1070 austreten. An die Ablassöffnung 1070 kann, ebenso wie bei der ersten Ausführungsform, mittels eines Anschlussgewindes 1071 eine Drainagevorrichtung wie beispielsweise ein Drainageschlauch, angeschlossen werden.

Im Betätigungshandgriff der zweiten Ausführungsform ist, ebenso wie bei der ersten Ausführungsform, ein Belüftungsventil 1110 angeordnet, welches in gleicher Weise ausgebildet ist, wie das Belüftungsventil 110 der ersten Ausführungsform. Das Belüftungsventil 1110 der zweiten Ausführungsform umfasst dementsprechend einen Ventilkörper 1111 und einen Ventilkörpersitz 1112, der aus seiner Geschlossen-Stellung mittels einer Schraubenfeder 1113 in die Offenstellung gedrückt wird, wodurch die Luft aus der Umgebung unter den Betätigungshandgriff 1056 hindurch in das Innere der Ventilvorrichtung strömen kann und somit die Entwässerung bzw. die Belüftung der Ventilvorrichtung ermöglicht. In der ersten Funktionsstellung wird das Belüftungsventil 1110 durch den Wasserüberdruck im Inneren der Ventilvorrichtung, der gegen einen Ventilteller 1117 drückt, in die Geschlossen-Stellung bewegt, wodurch in der ersten Funktionsstellung kein Wasser durch das Belüftungsventil 1110 austreten kann.

## Patentansprüche

1. Ventilvorrichtung für den frostsicheren Außenbetrieb, umfassend:
- eine Zulauföffnung (10),
- eine Abgabeöffnung (20),
- einen Verbindungskanal (30, 31-37), welcher die Zulauföffnung (10) mit der Abgabeöffnung (20) verbindet,
- ein erstes Ventil (40), welches ausgebildet ist, um die Fluidverbindung durch den Verbindungskanal (30,31-37) in einer ersten Funktionsstellung freizugeben und in einer zweiten Funktionsstellung zu verschließen, und
- eine Betätigungsvorrichtung (50) zum Betätigen des ersten Ventils (40), ein zweites Ventil (60), das in der ersten und zweiten Funktionsstellung geschlossen ist und das mit einer Ablassöffnung (70) zusammenwirkt, die so mit dem Verbindungskanal (30,31-37) verbunden ist, dass in einer dritten Funktionsstellung, in der das erste Ventil (40) geschlossen und das zweite Ventil (60) geöffnet ist, die in dem Verbindungskanal (30,31-37) befindliche Flüssigkeit durch die Ablassöffnung (70) abfließen kann,
**dadurch gekennzeichnet, dass** das zweite Ventil (60) so mit der Betätigungsvorrichtung (50) zusammenwirkt, dass es mittels der Betätigungsvorrichtung (50, ) in die Offen-Stellung bewegbar ist, vorzugsweise nachdem das erste Ventil (40) mittels der Betätigungsvorrichtung (50) in die Geschlossen-Stellung bewegt worden ist.

2. Ventilvorrichtung nach Anspruch 1,
**dadurch gekennzeichnet, dass** das erste Ventil einen ersten Ventilsitz (41) und einen ersten Ventilkörper (42) umfasst, und die Betätigungsvorrichtung über ein erstes elastisches Element (46) mit dem ersten Ventilkörper verbunden ist.

3. Ventilvorrichtung nach Anspruch 1 oder 2,
**dadurch gekennzeichnet, dass** das zweite Ventil (60) einen zweiten Ventilsitz (61) und einen zweiten Ventilkörper (62) umfasst und mittels eines zweiten elastischen Elements (63) in die Geschlossen-Stellung gedrückt wird.

4. Ventilvorrichtung nachAnspruch 2,
**dadurch gekennzeichnet, dass** das zweite Ventil mittels der Betätigungsvorrichtung gegen die elastische Kraft des ersten elastischen Elements (46) in die Offen-Stellung bewegbar ist.

5. Ventilvorrichtung nach Anspruch 1,
**dadurch gekennzeichnet, dass** das erste (1040) und zweite Ventil (1060) als Schieberventil, insbesondere als Drehschieberventil ausgeführt sind.

6. Ventilvorrichtung nach Anspruch 5,
das erste und zweite Ventil in ein einziges Schieberventil, insbesondere in ein Drehschieberventil integriert sind.

7. Ventilvorrichtung nach Anspruch 6,
**dadurch gekennzeichnet, dass** das Schieberventil ein erstes Ventilelement (1044) mit einer ersten (1041) und einer zweiten (1061) Durchflussöffnung und ein zweites Ventilelement (1045) umfasst, das relativ zum ersten Ventilelement bewegbar ist und mindestens eine Öffnung (1042) zum Erzeugen einer Fluidverbindung durch eine der Durchflussöffnungen im ersten Ventilelement aufweist, wobei das zweite und erste Ventilelement so ausgebildet sind, dass
- die erste Durchflussöffnung des ersten Ventilelements in der ersten Funktionsstellung freigegeben ist,
- beide Durchflussöffnungen des ersten Ventilelements in der zweiten Funktionsstellung verschlossen sind, und
- die zweite Durchflussöffnung des ersten Ventilelements in der dritten Funktionsstellung freigegeben ist.

8. Ventilvorrichtung nach Anspruch 7,
**dadurch gekennzeichnet, dass** das erste Ventilelement und das zweite Ventilelement in erster und zweiter und vorzugsweise auch dritter Funktionsstellung den gleichen axialen Abstand zueinander aufweisen.

9. Ventilvorrichtung nach einem der vorhergehenden Ansprüche 7 bis 8,
**dadurch gekennzeichnet, dass** das erste Ventilelement als Scheibe mit mindestens zwei exzentrischen Öffnungen ausgebildet ist.

10. Ventilvorrichtung nach Anspruch 9,
**dadurch gekennzeichnet, dass** die zwei exzentrischen Öffnungen des ersten Ventilelements um 180° zueinander versetzt sind.

11. Ventilvorrichtung nach einem der vorhergehenden Ansprüche 5-10,
**dadurch gekennzeichnet, dass** das Schieberventil zumindest ein Ventilelement aus einem keramischen Material aufweist, vorzugsweise zwei Ventilelemente (1044), (1045) aus einem keramischen Material.

12. Ventilvorrichtung nach einem der vorhergehenden Ansprüche 5-11,
**dadurch gekennzeichnet, dass** die Betätigungsvorrichtung (1056) um jeweils etwa 90° verschwenkt werden muss, um von der einer Funktionsstellung in eine andere Funktionsstellung zu gelangen.

13. Ventilvorrichtung nach einem der vorhergehenden Ansprüche 5-12,
**dadurch gekennzeichnet, dass** die Betätigungsvorrichtung um etwa 90° verschwenkt werden muss, um von der ersten in die zweite Funktionsstellung zu gelangen und um weitere 90° verschwenkt werden muss, um von der zweiten in die dritte Funktionsstellung zu gelangen.

14. Ventilvorrichtung nach einem der vorhergehenden Ansprüche,
**dadurch gekennzeichnet, dass** die Betätigungsvorrichtung ein manuell betätigbares Griffelement (56) aufweist, das mittels einer Verbindungsstange (52), die sich durch einen Teil des Verbindungskanals (30) erstreckt, mit dem ersten Ventil (40) verbunden ist.

15. Ventilvorrichtung nach einem der vorhergehenden Ansprüche,
**dadurch gekennzeichnet, dass** die Ventilvorrichtung für den Einbau in eine horizontale Bodenfläche ausgebildet ist und
- einen oberen Ventilvorrichtungsabschnitt (1), in dem ein oberer Verbindungskanalabschnitt, die Abgabeöffnung und vorzugsweise die Betätigungsvorrichtung angeordnet sind, und
- einen unteren Ventilvorrichtungsabschnitt (2), in dem die Zulauföffnung, die Ablassöffnung und vorzugsweise das erste und zweite Ventil angeordnet sind,
aufweist.

16. Ventilvorrichtung nach Anspruch 15,
**dadurch gekennzeichnet, dass** der untere Ventilvorrichtungsabschnitt, so lang ist, dass die Zulauföffnung in der Einbausituation etwa 80cm tief im Erdreich angeordnet werden kann.

17. Ventilvorrichtung nach einem der vorhergehenden Ansprüche,
**dadurch gekennzeichnet, dass** im oberen Bereich der Ventilvorrichtung eine Belüftungsöffnung (115) vorhanden ist, die einen Zutritt von Umgebungsluft in den Verbindungskanal zwecks Entleerung der Flüssigkeit aus dem Kanal durch die Ablassöffnung erlaubt.

18. Ventilvorrichtung nach Anspruch 17,
**dadurch gekennzeichnet, dass** die Belüftungsöffnung mit einem dritten Ventil (110) zusammenwirkt, welches die Belüftungsöffnung bei Vorhandensein eines Überdrucks im Verbindungskanal verschließt.

19. Ventilvorrichtung nach Anspruch 18,
**dadurch gekennzeichnet, dass** das dritte Ventil einen dritten Ventilsitz (112) und einen dritten Ventilkörper (111) umfasst und mittels eines dritten elastischen Elements (113) in die Offen-Stellung gedrückt wird.

20. Ventilvorrichtung nach einem der vorhergehenden Ansprüche,
**gekennzeichnet durch** eine erste Rückflussverhinderungsvorrichtung (80) die zwischen Zuflauföffnung und erstem Ventil angeordnet ist zur Verhinderung des Zutritts von Schmutzwasser aus der Ventilvorrichtung **durch** die Zulauföffnung.

21. Ventilvorrichtung nach einem der vorhergehenden Ansprüche,
**gekennzeichnet durch** eine zweite Rückflussverhinderungsvorrichtung (100) die zwischen Ablassöffnung und zweitem Ventil angeordnet ist zur Verhinderung des Zutritts von Schmutzwasser aus der Umgebung in die Ventilvorrichtung.

22. Ventilvorrichtung nach Anspruch 21,
**dadurch gekennzeichnet, dass** die zweite Rückflussverhinderungsvorrichtung einen Ventilschwimmkörper (101) umfasst, der ausgebildet ist, um bei Zutritt von Wasser durch die Ablassöffnung aufzuschwimmen und abdichtend gegen einen Ventilsitz (102) gedrückt zu werden.

23. Verfahren zum Belüften einer Ventilvorrichtung für den frostsicheren Außenbetrieb,
**dadurch gekennzeichnet, dass** in einer Funktionsstellung der Ventilvorrichtung, in der ein erstes Ventil (40), das mittels einer Betätigungsvorrichtung (50) in eine geschlossene Stellung gebracht wird, geschlossen ist, und das eine Zulauföffnung (10) mit einer Abgabeöffnung (20) der Ventilvorrichtung verbindet, ein zweites Ventil (60) mittels der Betätigungsvorrichtung (50) geöffnet wird, wobei das zweite Ventil mit einer Ablassöffnung zusammenwirkt, die so mit dem Verbindungskanal verbunden ist, dass in der Funktionsstellung die in dem Verbindungskanal befindliche Flüssigkeit durch die Ablassöffnung (70) abfließt.

## Claims

1. A valve arrangement for frost-resistant external operation including:
- a feed opening (10),
- a delivery opening (20),
- a connecting passage (30, 31-37) which connects the feed opening (10) to the delivery opening (20),
- a first valve (40) which is adapted to enable the fluid connection through the connecting passage (30, 31-37) in a first functional position and to close same in a second functional position, and
- an actuating device (50) for actuating the first valve (40),
- a second valve (60) which is closed in the first and second functional position and which co-operates with a drain opening (70) which is so connected to the connecting passage (30, 31-37) that in a third functional position in which the first valve (40) is closed and the second valve (60) is opened the liquid in the connecting passage (30, 31-37) can flow away through the drain opening (70),
**characterised in that** the second valve (60) co-operates with the actuating device (50) in such a way that it is movable into the open position by means of the actuating device (50), preferably after the first valve (40) has been moved into the closed position by means of the actuating device (50).

2. A valve arrangement according to claim 1 **characterised in that** the first valve includes a first valve seat (41) and a first valve body (42) and the actuating device is connected to the first valve body by way of a first elastic element (46).

3. A valve arrangement according to claim 1 or claim 2 **characterised in that** the second valve (60) includes a second valve seat (61) and a second valve body (62) and is urged into the closed position by means of a second elastic element (63).

4. A valve arrangement according to claim 2 **characterised in that** the second valve is movable into the open position by means of the actuating device, against the elastic force of the first elastic element (46).

5. A valve arrangement according to claim 1 **characterised in that** the first valve (1040) and the second valve (1060) are in the form of slide valves, in particular rotary slide valves.

6. A valve arrangement according to claim 5 **characterised in that** the first and second valves are integrated into a single slide valve, in particular into a rotary slide valve.

7. A valve arrangement according to claim 6 **characterised in that** the slide valve includes a first valve element (1044) having a first through-flow opening (1041) and a second through-flow opening (1061) and a second valve element (1045) which is movable relative to the first valve element and has at least one opening (1042) for producing a fluid communication through one of the through-flow openings in the first valve element, wherein the first and second valve elements are so designed that
- the first through-flow opening of the first valve element is open in the first functional position,
- both through-flow openings of the first valve element are closed in the second functional position, and
- the second through-flow opening of the first valve element is open in the third functional position.

8. A valve arrangement according to claim 7 **characterised in that** the first valve element and the second valve element are at the same axial spacing relative to each other in the first and second and preferably also third functional positions.

9. A valve arrangement according to one of preceding claims 7 to 8 **characterised in that** the first valve element is in the form of a disc with at least two eccentric openings.

10. A valve arrangement according to claim 9 **characterised in that** the two eccentric openings of the first valve element are displaced through 180° relative to each other.

11. A valve arrangement according to one of preceding claims 5 to 10 **characterised in that** the slide valve has at least one valve element comprising a ceramic material, preferably two valve elements (1044, 1045) of a ceramic material.

12. A valve arrangement according to one of preceding claims 5 to 11 **characterised in that** the actuating device (1056) must be pivoted through about 90° in each case in order to pass from the one functional position into another functional position.

13. A valve arrangement according to one of preceding claims 5 to 12 **characterised in that** the actuating device must be pivoted through about 90° in order to pass from the first to the second functional position and must be pivoted through a further 90° in order to pass from the second to the third functional position.

14. A valve arrangement according to one of the preceding claims **characterised in that** the actuating device has a manually actuable handle element (56) which is connected to the first valve (40) by means of a connecting rod (52) extending through a part of the connecting passage (30).

15. A valve arrangement according to one of the preceding claims **characterised in that** the valve arrangement is designed for installation in a horizontal ground surface and has
- an upper valve arrangement portion (1) in which an upper connecting passage portion, the delivery opening and preferably the actuating device are arranged, and
- a lower valve arrangement portion (2) in which the feed opening, the drain opening and preferably the first and second valves are arranged.

16. A valve arrangement according to claim 15 **characterised in that** the lower valve arrangement portion is so long that the feed opening in the installation position is arranged at about 80 cm deep in the ground.

17. A valve arrangement according to one of the preceding claims **characterised in that** provided in the upper region of the valve arrangement is a venting opening (115) which allows an access of ambient air into the connecting passage for the purposes of emptying the liquid out of the passage through the drain opening.

18. A valve arrangement according to claim 17 **characterised in that** the venting opening co-operates with a third valve (110) which closes the venting opening when there is an increased pressure in the connecting passage.

19. A valve arrangement according to claim 18 **characterised in that** the third valve includes a third valve seat (112) and a third valve body (111) and is urged into the open position by means of a third elastic element (113).

20. A valve arrangement according one of the preceding claims **characterised by** a first return flow check device (80) arranged between the feed opening and the first valve to prevent the access of dirty water from the valve arrangement through the feed opening.

21. A valve arrangement according to one of the preceding claims **characterised by** a second return flow check device (100) arranged between the drain opening and the second valve to prevent the access of dirty water from the environment into the valve arrangement.

22. A valve arrangement according to claim 21 **characterised in that** the second return flow check device includes a valve float body (101) which is adapted to float up upon access of water through the drain opening and to be pressed in sealing relationship against a valve seat (102).

23. A method of venting a valve arrangement for frost-resistant external operation
**characterised in that** in a functional position of the valve arrangement in which a first valve (40) which is moved into a closed position by means of an actuating device (50) and which connects a feed opening (10) to a delivery opening (20) of the valve arrangement is closed, a second valve (60) is opened by means of the actuating device (50), wherein the second valve co-operates with a drain opening which is so connected to the connecting passage that in the functional position the liquid in the connecting passage flows away through the drain opening (70).

## Revendications

1. Dispositif de soupape destiné à une exploitation à l'extérieur protégée du gel, comportant :
- une ouverture d'alimentation (10),
- une ouverture de distribution (20),
- un canal de raccordement (30, 31-37) qui raccorde l'ouverture d'alimentation (10) à l'ouverture de distribution (20),
- une première soupape (40) qui est réalisée de manière à libérer la communication fluidique par le canal de raccordement (30, 31-37) dans une première position fonctionnelle et à la fermer dans une deuxième position fonctionnelle, et
- un dispositif d'actionnement (50) pour actionner la première soupape (40),
- une deuxième soupape (60), qui est fermée dans la première et dans la deuxième position fonctionnelle et qui coopère avec une ouverture d'évacuation (70) qui est raccordée au canal de raccordement (30, 31-37) de manière à ce que, dans une troisième position fonctionnelle dans laquelle la première soupape (40) est fermée et la deuxième soupape (60) est ouverte, le liquide se trouvant dans le canal de raccordement (30, 31-37) peut s'écouler par l'ouverture d'évacuation (70),
**caractérisé en ce que** la deuxième soupape (60) coopère avec le dispositif d'actionnement (50), de manière à ce qu'elle puisse être déplacée, à l'aide du dispositif d'actionnement (50), en position ouverte, de préférence après que la première soupape (40) ait été déplacée en position fermée à l'aide du dispositif d'actionnement (50).

2. Dispositif de soupape selon la revendication 1,
**caractérisé en ce que** la première soupape comprend un premier siège de soupape (41) et un premier corps de soupape (42), et que le dispositif d'actionnement est raccordé au premier corps de soupape par l'intermédiaire d'un premier élément élastique (46).

3. Dispositif de soupape selon la revendication 1 ou 2,
**caractérisé en ce que** la deuxième soupape (60) comprend un deuxième siège de soupape (61) et un deuxième corps de soupape (62) et qu'elle est pressée en position fermée à l'aide d'un deuxième élément élastique (63).

4. Dispositif de soupape selon la revendication 2,
**caractérisé en ce que** la deuxième soupape peut être déplacée en position ouverte contre la force élastique du premier élément élastique (46) à l'aide du dispositif d'actionnement.

5. Dispositif de soupape selon la revendication 1,
**caractérisé en ce que** la première (1040) et la deuxième soupape (1060) sont réalisées comme une soupape à tiroir, en particulier comme une soupape à tiroir rotatif.

6. Dispositif de soupape selon la revendication 5,
**caractérisé en ce que** la première et la deuxième soupape sont intégrées dans une seule soupape à tiroir, en particulier dans une soupape à tiroir rotatif.

7. Dispositif de soupape selon la revendication 6,
**caractérisé en ce que** la soupape à tiroir comprend un premier élément de soupape (1044) avec une première (1041) et une seconde (1061) ouverture de passage et un second élément de soupape (1045), qui peut être déplacé par rapport au premier élément de soupape et qui comporte au moins une ouverture (1042) pour créer une communication fluidique à travers une des ouvertures de passage dans le premier élément de soupape, le premier et le second élément de soupape étant réalisés de manière à ce que
- la première ouverture de passage du premier élément de soupape soit libérée dans la première position fonctionnelle,
- les deux ouvertures de passage du premier élément de soupape soient fermées dans la deuxième position fonctionnelle, et
- la seconde ouverture de passage du premier élément de soupape soit libérée dans la troisième position fonctionnelle.

8. Dispositif de soupape selon la revendication 7,
**caractérisé en ce que** le premier élément de soupape et le second élément de soupape présentent la même distance axiale l'un par rapport à l'autre dans la première, deuxième et de préférence aussi la troisième position fonctionnelle.

9. Dispositif de soupape selon l'une des revendications précédentes 7 à 8,
**caractérisé en ce que** le premier élément de soupape est réalisé sous la forme d'un disque avec au moins deux ouvertures excentriques.

10. Dispositif de soupape selon la revendication 9,
**caractérisé en ce que** les deux ouvertures excentriques du premier élément de soupape sont décalées l'une par rapport à l'autre de 180°.

11. Dispositif de soupape selon l'une des revendications précédentes 5 à 10,
**caractérisé en ce que** la soupape à tiroir comporte au moins un élément de soupape constitué à partir d'un matériau céramique, de préférence deux éléments de soupape (1044), (1045) constitués à partir d'un matériau céramique.

12. Dispositif de soupape selon l'une des revendications précédentes 5 à 11,
**caractérisé en ce que** le dispositif d'actionnement (1056) doit être pivoté respectivement d'environ 90° pour passer de l'une des positions fonctionnelles à une autre position fonctionnelle.

13. Dispositif de soupape selon l'une des revendications précédentes 5 à 12,
**caractérisé en ce que** le dispositif d'actionnement doit être pivoté d'environ 90° pour passer de la première à la deuxième position fonctionnelle et d'encore 90° pour passer de la deuxième à la troisième position fonctionnelle.

14. Dispositif de soupape selon l'une des revendications précédentes,
**caractérisé en ce que** le dispositif d'actionnement comporte un élément de préhension (56) pouvant être actionné manuellement qui, à l'aide d'une tige de raccordement (52), qui s'étend à travers une partie du canal de raccordement (30), est raccordé à la première soupape (40).

15. Dispositif de soupape selon l'une des revendications précédentes,
**caractérisé en ce que** le dispositif de soupape est réalisé pour être installé dans une surface de fond horizontale et **en ce qu'**il comporte :
- une partie supérieure du dispositif de soupape (1) dans laquelle une partie supérieure du canal de raccordement, l'ouverture de distribution et de préférence le dispositif d'actionnement sont agencés, et
- une partie inférieure du dispositif de soupape (2), dans laquelle l'ouverture d'alimentation, l'ouverture d'évacuation et de préférence la première et la deuxième soupape sont agencées.

16. Dispositif de soupape selon la revendication 15,
**caractérisé en ce que** la longueur de la partie inférieure du dispositif de soupape est telle que l'ouverture d'alimentation peut être agencée, dans la situation d'installation, à environ 80 cm de profondeur dans la terre.

17. Dispositif de soupape selon l'une des revendications précédentes,
**caractérisé en ce que**, dans la zone supérieure du dispositif de soupape, une ouverture de ventilation (115) est disponible, qui permet un accès de l'air ambiant dans le canal de raccordement afin d'évacuer le liquide du canal par l'ouverture d'évacuation.

18. Dispositif de soupape selon la revendication 17,
**caractérisé en ce que** l'ouverture de ventilation coopère avec une troisième soupape (110) qui ferme l'ouverture de ventilation en présence d'une surpression dans le canal de raccordement.

19. Dispositif de soupape selon la revendication 18,
**caractérisé en ce que** la troisième soupape comprend un troisième siège de soupape (112) et un troisième corps de soupape (111) et est pressée en position ouverte à l'aide d'un troisième élément élastique (113).

20. Dispositif de soupape selon l'une des revendications précédentes,
**caractérisé par** un premier dispositif destiné à empêcher le reflux (80), agencé entre l'ouverture d'alimentation et la première soupape, pour empêcher l'arrivée d'eau usée à partir du dispositif de soupape par l'ouverture d'alimentation.

21. Dispositif de soupape selon l'une des revendications précédentes,
**caractérisé par** un second dispositif destiné à empêcher le reflux (100), agencé entre l'ouverture d'évacuation et la deuxième soupape, pour empêcher l'arrivée d'eau usée provenant de l'environnement dans le dispositif de soupape.

22. Dispositif de soupape selon la revendication 21,
**caractérisé en ce que** le second dispositif destiné à empêcher le reflux comporte un corps flottant de soupape (101) réalisé pour flotter lors de l'arrivée d'eau par l'ouverture d'évacuation et être pressé de manière étanche contre un siège de soupape (102).

23. Procédé pour ventiler un dispositif de soupape destiné à une exploitation à l'extérieur protégée du gel,
**caractérisé en ce que**, dans une première position fonctionnelle du dispositif de soupape dans laquelle une première soupape (40), qui est disposée dans une position fermée à l'aide d'un dispositif d'actionnement (50), est fermée, et qui raccorde une ouverture d'alimentation (10) à une ouverture de distribution (20) du dispositif de soupape, une deuxième soupape (60) est ouverte à l'aide du dispositif d'actionnement (50), la deuxième soupape coopérant avec une ouverture d'évacuation qui est raccordée au canal de raccordement de manière à ce que, dans la position fonctionnelle, le liquide se trouvant dans le canal de raccordement s'écoule par l'ouverture d'évacuation (70).
